# EUROPÄISCHE PATENTSCHRIFT

(11) **EP 0 909 584 B1**
(45) Veröffentlichungstag und Bekanntmachung des Hinweises auf die Patenterteilung: **18.08.2004**
(21) Anmeldenummer: 98117731.4
(22) Anmeldetag: 18.09.1998
(51) Int. Cl.: B01L 3/14, B65D 45/02

(54) **Kappe für einen Reagenzbehälter**
Cap for reagent container
Fermeture pour un récipient à réactifs

(30) Priorität: 18.10.1997 DE 19746169
(43) Veröffentlichungstag der Anmeldung: 21.04.1999
(73) Patentinhaber: Dade Behring Marburg GmbH, 35001 Marburg (DE)
(72) Erfinder: Otto, Ralf, 65195 Wiesbaden (DE); Bickoni, Dieter, 65239 Hochheim (DE); Wilmes, Hugo, 65812 Bad Soden (DE)

(56) Entgegenhaltungen:
- EP-A- 0 331 057
- WO-A-95/04685
- WO-A-96/35621
- DE-A- 3 504 258

## Beschreibung

Gegenstand der Erfindung ist eine Kappe für einen Reagenzbehälter, die mit einem verschließbaren Deckel versehen ist.

Es sind schon verschiedene Ausführungsformen für den Verschluß von Reagenzbehältern entwickelt worden, mit denen die Verdunstung und Kontamination von Reagenzien vermindert werden soll, die zur Analyse biologischer Flüssigkeiten eingesetzt werden. Aus der deutschen Offenlegungsschrift 33 46 517 ist bereits eine Öffnungs- und Schließeinrichtung für einen Reagenzbehälter bekannt, die das Verdampfen der Flüssigkeit verhindern soll. Dafür ist ein Deckel vorgesehen, welcher eine Vielzahl von Erhebungen aus elastischem Material an seiner Unterseite trägt. Dieser Deckel wird durch einen Schließmechanismus luftdicht auf den Reagenzbehälter aufgesetzt und läßt sich auch dann noch vom Behälter leicht abheben, wenn der Behälterinhalt gefroren ist.

Aus der EP-A-0 509 281 ist ein Behälterverschluß mit einem durchstoßbaren Verschlußkörper bekannt, der die Entnahme oder Zugabe von Flüssigkeiten mittels einer stumpfen Hohlnadel erlaubt, wobei der Behälterverschluß zumindestens teilweise aus einem hochelastischen Material besteht, das zumindestens 75% seiner Dicke an der Durchstoßungsstelle eingeschnitten ist. Der Verschluß kann dabei eigenständig in Form eines Stopfens oder als Einlageplättchen für einen Verschluß ausgeführt werden. Hierbei besteht jedoch die Gefahr, daß die Hohlnadel beim Durchstoßen des Behälterverschlusses verunreinigt wird.

Weiterhin ist aus EP-A-0 543 638 ein Verschluß bekannt, der an einem langgestreckten Arm verschwenkbar angebracht ist und in einer ersten Stellung die Öffnung des Gefäßes abdichtet und in einer zweiten Stellung die Öffnung nicht abdichtet. Dabei ist der langgestreckte Arm mit einer Vorspanneinrichtung versehen, durch die der Verschluß des Reagenzbehälters gesichert wird.

Den vorstehend genannten Verschlüssen liegt die Aufgabe zugrunde, die zu untersuchenden Proben und Reagenzien vor Verunreinigung und Verdunstung zu schützen. Insbesondere müssen die Reagenzien, die für die programmgesteuerte Analyse einer biologischen Flüssigkeit in einem Analysator eingesetzt werden und aus denen mittels einer Pipette über einen längeren Zeitraum immer wieder kleine Reagenzmengen entnommen werden, vor, während und nach der Pipettierung hermetisch verschlossen werden und dieser Verschluß muß auch noch nach vielmaligen Gebrauch sichergestellt sein. Diese Anforderungen konnten durch die bisher entwickelten Verschlußeinrichtungen noch nicht zufriedenstellend gelöst werden, weil die Gefahr der unerwünschten Verschleppung von Spuren des Reagenzes oder der biologischen Flüssigkeit von einem Gefäß in ein anderes nicht sicher ausgeschlossen werden konnte und ein hinreichender Verdunstungsschutz nicht gegeben war.

Es stellte sich deshalb die Aufgabe, einen verbesserten Verschluß für Reagenzbehälter zu entwickeln, die in programmgesteuerten Analysatoren eingesetzt werden und auch bei vielmaligen Gebrauch noch sicher und hygienisch verschlossen bleiben müssen. Gleichzeitig sollte der Verschluß in seinen äußeren Abmessungen den bisher bekannten und verwendeten Verschlüssen möglichst ähnlich sein, so daß die bereits vorhandenen Analysengeräte nicht umgestellt werden müssen. Außerdem ist es für einen programmgesteuerten Analysator auch erforderlich, daß er jedes Reagenzfläschen anhand des außen angebrachten Barcodes erkennen kann, um das für einen bestimmten Nachweis erforderliche Reagenz auswählen zu können. Das ist aber nur möglich, wenn das Reagenz im Analysator in einer vorher festgelegten Stellung zentriert ist, weil nur dann der Barcode an der für die automatische Leseeinrichtung erkennbaren Position sichtbar wird.

Diese Aufgaben werden durch eine Kappe für einen Reagenzbehälter gelöst, die mit einem verschließbaren Deckel versehen ist, der
a) mittels eines schräggestellten, bistabilien Scharniers aus der Kappenverschlußstellung unter Öffnung des Behälters seitlich nach oben schwenkbar ist,
b) einen oder mehreren Mitnehmer trägt, die mit einer Vorrichtung zum Öffnen oder Schließen des Deckels in Kontakt treten können und
   die Kappe ein oder mehrere Zentrierelemente aufweist, durch die die Einstellposition des Reagenzbehälters im Analysator fixiert wird.

- Fig. 1: zeigt die erfindungsgemäße Kappe mit geschlossenem Deckel aus verschiedenen Blickwinkeln,
- Fig. 2: zeigt die Kappe mit geöffnetem Deckel,
- Fig. 3: zeigt den für die Kappe vorgesehenen Dichteinsatz,
- Fig. 4: zeigt einen Reagenzbehälter mit der erfindungsgemäßen Kappe,
- Fig. 5: zeigt verschiedene Positionen des Deckels während des Öffnens der Kappe
- Fig. 6: zeigt verschiedene Positionen des Deckels während des Schließens der Kappe.

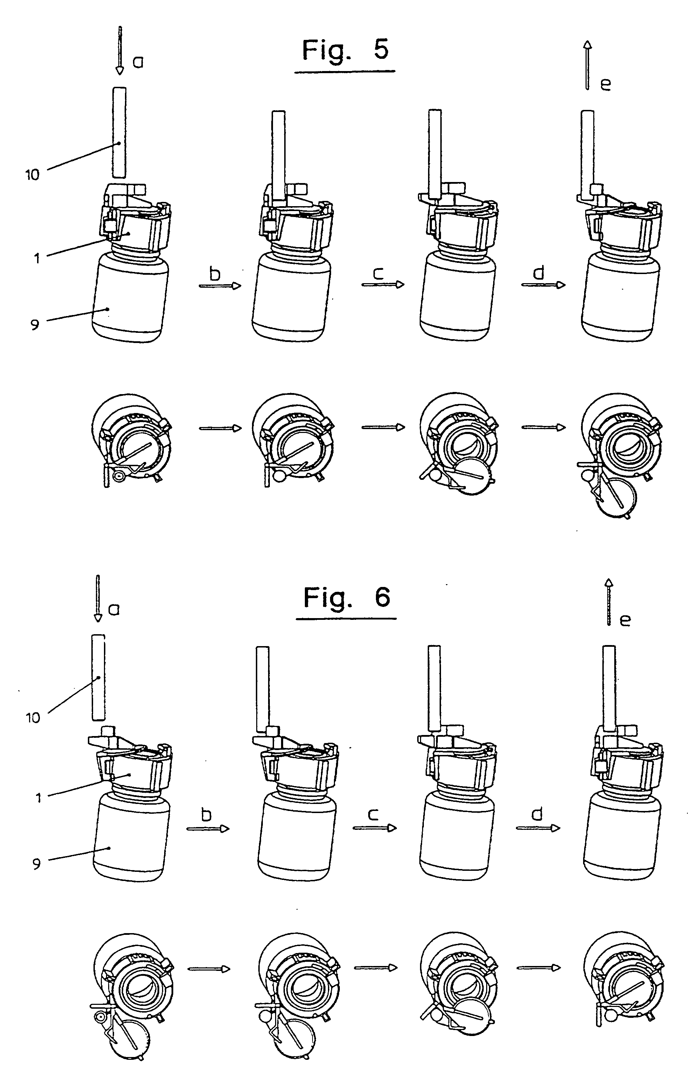

Das Öffnen und Schließen des Deckels der erfindungsgemäßen Kappe (Fig. 5 und 6) wird durch einen sich in vertikaler Richtung bewegenden Stössel 10 bewirkt, der an die an der erfindungsgemäßen Kappe angebrachten Mitnehmer 4 angreift und den Deckel 2 automatisch öffnet, sobald der Reagenzbehälter 9 im Analysator die zur Entnahme der Reagenzflüssigkeit vorgesehene Position erreicht.

Wie in Fig. 5 dargestellt, senkt sich der Stössel 10 im Verfahrensschritt a vertikal nach unten und tritt dabei mit dem an der Kappe 1 angebrachten Mitnehmer in Kontakt. Während des automatischen Weitertransportes des Reagenzbehälters 9 im Analysator wird in den Verfahrensschritten b bis d der Deckel vollständig geöffnet und dann der Stössel im Verfahrensschritt e wieder nach oben gehoben. Jetzt kann die Entnahme der Reagenzflüssigkeit durch eine - nicht gezeichnete - Pipette erfolgen.

Fig. 5 zeigt ebenfalls die verschiedenen Positionen des Deckels zur Kappe während des Öffnungsvorganges in Draufsicht von oben. Nach der Entnahme der Reagenzflüssigkeit führt die Weiterbewegung des Reagenzbehälters 9 im Analysator zu einem erneuten Kontakt des Stössels 10 mit einem am Deckel angebracht Mitnehmer 4, der ein Schließen des Deckels zur Folge hat.

Fig. 6 zeigt entsprechend den Schließvorgang in mehreren aufeinander folgenden Schritten. Die Schrägstellung des mit dem Deckel verbundenen bistabilen Schamiers 3 hat zur Folge, daß der Deckel beim Öffnen leicht angehoben und beim Schließen auf die Kappe abgesenkt wird. Die Öffnungszeit des Reagenzgefäßes hängt somit nur von der Zeit ab, die zur Entnahme der Reagenzflüssigkeit benötigt wird. Sobald der Reagenzbehälter aus der Entnahmeposition wieder entfernt wird, verschließt sich der Deckel des Gefäßes durch den Eingriff des Stössels 10 am Mitnehmer 4 des Deckels.

Ein besonders dichter Verschluß des Deckels läßt sich erreichen, wenn am Deckel eine Nase angebracht ist, die in der Kappenverschlußstellung in eine Vertiefung einrastet und dadurch eine druckbelastete Dichtung zwischen dem Deckel und dem oberen Rand der Kappe sicherstellt.

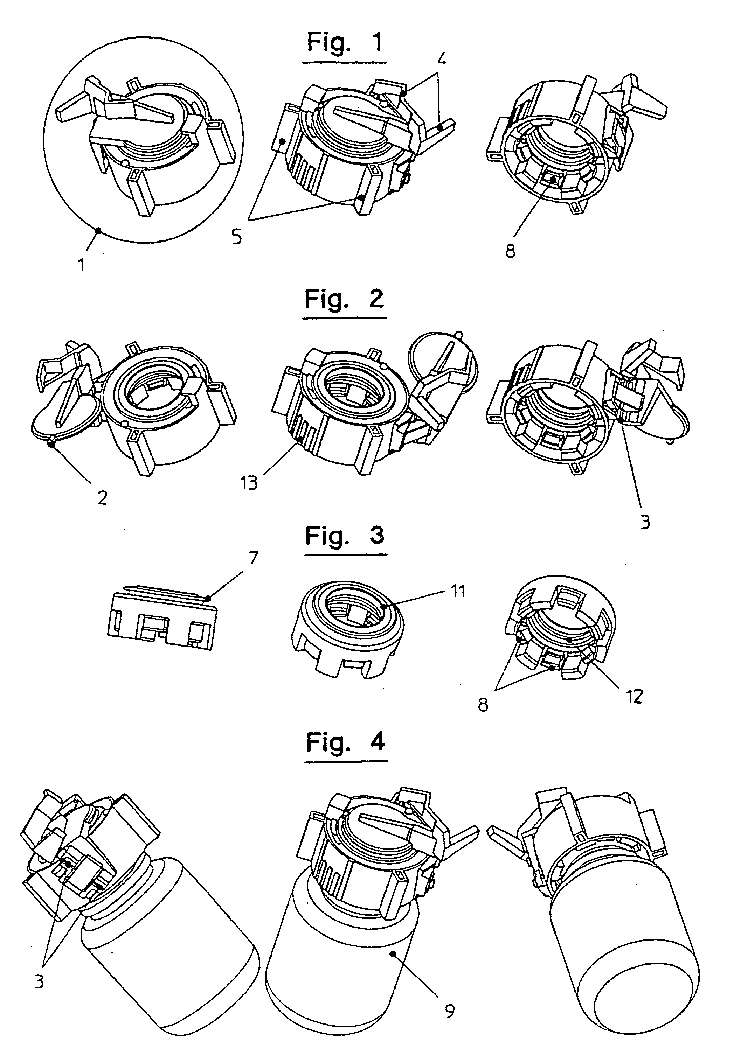

Zur zuverlässigen Abdichtung der Kappe 1 gegenüber dem Reagenzbehälter 9 wird erfindungsgemäß ein aus einem elastischen Material bestehender innerer Dichteinsatz 6 verwendet, der in Fig.3 dargestellt ist. Er zeichnet sich dadurch aus, daß er in der Kappe mit einem die Auflagefläche des Deckels umgreifenden Haltewulst 7 befestigt ist und Dichtlippen zwischen Kappe und Deckel 11 sowie zwischen Kappe und Behälteröffnung 12 trägt. Außerdem weist der Dichteinsatz im Inneren der Kappe Strukturen 8 auf, die die freie Drehbarkeit der Kappe auf dem Reagenzbehälter gewährleisten und die Abdichtung von unterschiedlich geformten Behälteröffnungen sicherstellen.

Die freie Drehbarkeit des Reagenzbehälters bei feststehender Kappe ohne Verlust an Dichtigkeit ist erforderlich, weil der Reagenzbehälter im Analysator eine genau vorbestimmte Position einnehmen muß. Der Behälter muß nämlich so ausgerichtet sein, daß sein Barcode von einem Lesegerät erfaßt werden kann, welches anhand des Barcodes den Inhalt des Reagenzbehälters erkennt und dadurch in der Lage ist, das für die jeweilige Analyse erforderliche Reagenz in die geeignete Entnahmeposition zu steuern. Zur Erleichterung der genauen Positionierung des Reagenzbehälters in die für das Lesegerät erkennbare Stellung des Barcodes kann an der erfindungsgemäßen Kappe eine Markierung 13 angebracht sein, die die Position angibt, die der Barcode im Verhältnis zur Kappe einnehmen muß.

Die Position des Reagenzbehälters im Analysator wird außerdem auch durch ein oder mehrere Zentrierelemente 5 festgelegt, die an der erfindungsgemäßen Kappe angebracht sind und sicherstellen, daß das Reagenzgefäß nur in einer ganz bestimmten Position in den Analysator eingesetzt werden kann. Die Zentrierelemente haben außerdem die Aufgabe, eine Veränderung der Position des Reagenzbehälters während des automatischen Öffens und Schließens des Deckels mittels des Stössels 10 zu verhindern.
Die Zuverlässigkeit der Analysenergebnisse kann mittels der erfindungsgemäßen Kappe auch optisch noch weiter dadurch erhöht werden, daß die für einen bestimmten Nachweis erforderlichen Reagenzien mit gleichfarbigen Kappen versehen werden.

In Fig. 3 ist der Reagenzglasbehälter mit der erfindungsgemäßen Kappe dargestellt. Während die Kappe aus einem oder mehreren verschiedenen Kunststoffen bestehen kann, besteht der Reagenzbehälter selbst vorzugsweise aus einem durchsichtigen Kunststoff oder Glas. Besonders vorteilhaft ist, daß Reagenzgefäße unterschiedlicher Bauform mit der gleichen erfindungsgemäßen Kappe verschlossen und so in einem automatischen Analysator eingesetzt werden können.

Die erfindungsgemäße Kappe leistet einen erheblichen Beitrag zur Sicherstellung gleichbleibend zuverlässiger Analysenergebnisse. Durch die Verhinderung der Verdunstung des Lösungsmittels der Reagenzien bleibt die Konzentration der Reagenzien konstant. Verunreinigungen der Reagenzlösungen und biologischen Flüssigkeiten werden zuverlässig dadurch vermieden, daß die in dem erfindungsgemäßen Verfahren eingesetzten Pipetten nach jedem Arbeitsgang einer Waschvorrichtung zugeführt und dort von allen anhaftenden Bestandteilen befreit werden.

### Bezugszeichenliste:

- 1: Kappe
- 2: Deckel
- 3: bistabiles Scharnier
- 4: Mitnehmer
- 5: Zentrierelement
- 6: Dichteinsatz
- 7: Haltewulst
- 8: Strukturen am Dichtelement
- 9: Reagenzbehälter
- 10: Stössel
- 11: Obere Dichtlippe
- 12: Innere Dichtlippe
- 13: Markierung für Barcode

## Patentansprüche

1. Kappe für einen Reagenzbehälter, die mit einem verschließbaren Deckel versehen ist, wobei der Deckel (2)
a) mittels eines schräggestellten, bistabilen Schamiers (3) aus der Kappenverschlußstellung unter Öffnung des Behälters seitlich nach oben schwenkbar ist,
b) einen oder mehrere Mitnehmer (4) trägt, die mit einer Vorrichtung zum Öffnen oder Schließen des Deckels (3) in Kontakt treten können und
die Kappe (1) ein oder mehrere Zentrierelemente (5) aufweist, durch die die Einstellposition des Reagenzbehälters (9) im Analysator fixiert wird.

2. Kappe nach Anspruch 1, **dadurch gekennzeichnet, daß** der Deckel (2) durch eine mechanisch bewegte Vorrichtung geöffnet und verschlossen werden kann.

3. Kappe nach den Ansprüchen 1 und 2, **dadurch gekennzeichnet, daß** der Deckel (2) eine Nase trägt, die in der Kappenverschlußstellung in eine Vertiefung einrastet und dadurch eine druckbelastete Dichtung zwischen dem Deckel und dem oberen Rand der Kappe gewährleistet.

4. Kappe nach den Ansprüchen 1 bis 3, **dadurch gekennzeichnet, daß** sie einen aus einem elastischen Material bestehenden inneren Dichteinsatz (6) trägt.

5. Kappe nach Anspruch 4, **dadurch gekennzeichnet, daß** der Dichteinsatz (6) Konturen besitzt (7), mit denen er in der Kappe axial gehalten wird, und Dichtlippen zwischen Kappe und Deckel (11) und zwischen Kappe und Behälteröffnung (12) aufweist.

6. Kappe nach den Ansprüchen 4 bis 5, **dadurch gekennzeichnet, daß** der Dichteinsatz (6) im Inneren der Kappe Strukturen (8) aufweist, die die Drehbarkeit der Kappe auf dem Reagenzbehälter (9) gewährleisten und die Abdichtung von unterschiedlich geformten Behälteröffnungen sicherstellen.

7. Kappe nach den Ansprüchen 1 bis 6, **dadurch gekennzeichnet, daß** das an der Kappe (1) angebrachte schräggestellte Scharnier (3) eine Fixierung des Deckels sowohl in der Kappenverschlußstellung als auch in der geöffneten Endstellung sicherstellt.

8. Kappe nach den Ansprüchen 1 bis 7, **dadurch gekennzeichnet, daß** sie eine Markierung (13) trägt, die eine vorher festgelegte, bestimmte Orientierung der Kappe (1) zum Reagenzbehälter (9) ermöglicht.

9. Kappe nach den Ansprüchen 1 bis 8, **dadurch gekennzeichnet, daß** die für einen bestimmten Test benötigten Reagenzbehälter gleichfarbige Kappen tragen.

10. Kappe nach den Ansprüchen 1 bis 9, **dadurch gekennzeichnet, daß** sie aus einem oder mehreren thermoplastischen Kunststoffen besteht.

11. Verfahren zur programmgesteuerten Analyse einer biologischen Flüssigkeit in einem Analysator, bei dem eine Probe der Flüssigkeit mit einem oder mehreren Nachweisreagenzien in einem Meßgefäß zusammengebracht wird, **dadurch gekennzeichnet, daß** die Nachweisreagenzien mittels einer Pipette aus einem Behälter entnommen werden, der eine Kappe gemäß den Ansprüchen 1 bis 10 trägt, und die Pipette nach jedem Entnahmevorgang in einer Waschstation gereinigt wird.

## Claims

1. A cap for a reagent container which is provided with a scalable lid, in which lid (2)
a) can be pivoted laterally upward from the cap sealing position, with the container being opened, by means of an inclined bistable hinge (3) ,
b) bears one or more catches (4) which can come into contact with an apparatus for opening or closing the lid (3), and
the cap (1) has one or more centering elements (5) by means of which the reagent-container (9) setting position in the analyzer is fixed.

2. The cap as claimed in claim 1, wherein the lid (2) can be opened and closed by a mechanically actuated apparatus.

3. The cap as claimed in claims 1 and 2, wherein the. lid (2) bears a lug which engages into a recess in the cap sealing position and as a result ensures compressively loaded sealing between the lid and the upper rim of the cap.

4. The cap as claimed in claims 1 to 3, wherein it bears an inner seal insert (6) consisting of an elastic material.

5. The cap as claimed in claims 4, wherein the seal insert (6) has contours (7), by which it is held axially in the cap, and has sealing lips between cap and lid (11) and between cap and container orifice (12).

6. The cap as claimed in claims 4 and 5, wherein the seal insert (6) has, in the interior of the cap, structures (8) which ensure the rotatability of the cap on the reagent container (9) and ensure the sealing of differently shaped container orifices.

7. The cap as claimed in claims 1 to 6, wherein the inclined hinge (3) mounted on the cap (1) ensures that the lid is fixed either in the cap sealing position or in the final open position.

8. The cap as claimed in claims 1 to 7, wherein it bears a marking (13) which allows a previously established defined orientation of the cap (1) to the reagent container (9).

9. The cap as claimed in claims 1 to 8, wherein the reagent containers required for a defined test bear caps of the same color.

10. The cap as claimed in claims 1 to 9, wherein it consists of one or more thermoplastics.

11. A process for program-controlled analysis of a biological fluid in an analyzer in which a sample of the fluid is brought together with one or more detection reagents in a measuring vessel, wherein the detection reagents are removed from a container by a pipette, which container bears a cap as claimed in claims 1 to 10, and the pipette is cleaned in a wash station after each removal operation.

## Revendications

1. Capuchon pour un récipient à réactifs qui est pourvu d'un couvercle pouvant être fermé, le couvercle (2)
a) pouvant pivoter latéralement vers le haut au moyen d'une charnière (3) bistable inclinée depuis la position de fermeture du capuchon, avec ouverture du récipient,
b) portant un ou plusieurs entraîneurs (4) qui peuvent entrer en contact avec un dispositif pour l'ouverture ou la fermeture du couvercle (3), et
le capuchon (1) comportant un ou plusieurs éléments de centrage (5) par lesquels la position de réglage du récipient à réactifs (9) dans l'analyseur est fixée.

2. Capuchon selon la revendication 1, **caractérisé en ce que** le couvercle (2) peut être ouvert ou fermé au moyen d'un dispositif déplacé mécaniquement.

3. Capuchon selon les revendications 1 et 2, **caractérisé en ce que** le couvercle (2) porte un ergot qui, en position de fermeture du capuchon, s'encliquette dans un renfoncement et garantit par là une étanchéité soumise à pression entre le couvercle et le bord supérieur du capuchon.

4. Capuchon selon les revendications 1 à 3, **caractérisé en ce qu'**il porte un insert d'étanchéité (6) intérieur constitué en un matériau élastique.

5. Capuchon selon la revendication 4, **caractérisé en ce que** l'insert d'étanchéité (6) présente des contours (7) par lesquels il est maintenu axialement dans le capuchon, et comporte des lèvres d'étanchéité entre le capuchon et le couvercle (11) et entre le capuchon et l'ouverture (12) du récipient.

6. Capuchon selon les revendications 4 et 5, **caractérisé en ce que** l'insert d'étanchéité (6) présente, à l'intérieur du capuchon, des structures (8) qui garantissent la possibilité de rotation du capuchon sur le récipient à réactifs (9) et assurent l'étanchéité d'ouvertures du récipient de formes différentes.

7. Capuchon selon les revendications 1 à 6, **caractérisé en ce que** la charnière (3) inclinée, placée sur le capuchon (1), assure une fixation du couvercle aussi bien en position de fermeture du capuchon que dans la position terminale ouverte.

8. Capuchon selon les revendications 1 à 7, **caractérisé en ce qu'**il porte un marquage (13) qui permet une orientation déterminée, préalable et définie du capuchon (11) par rapport au récipient à réactifs (9).

9. Capuchon selon les revendications 1 à 8, **caractérisé en ce que** les récipients à réactifs, nécessaires pour un test déterminé, portent des capuchons de même couleur.

10. Capuchon selon les revendications 1 à 9, **caractérisé en ce qu'**il est constitué en une ou plusieurs matières thermoplastiques.

11. Procédé d'analyse commandée par programme d'un liquide biologique dans un analyseur, dans lequel un échantillon du liquide est réuni avec un ou plusieurs réactifs indicateurs dans un récipient de mesure, **caractérisé en ce que** les réactifs indicateurs sont prélevés au moyen d'une pipette d'un récipient qui porte un capuchon selon les revendications 1 à 10, et la pipette est nettoyée dans un poste de lavage après chaque prélèvement.
